# EUROPÄISCHE PATENTSCHRIFT

(11) **EP 0 979 675 B1**
(45) Veröffentlichungstag und Bekanntmachung des Hinweises auf die Patenterteilung: **15.09.2010**
(21) Anmeldenummer: 99112848.9
(22) Anmeldetag: 02.07.1999
(51) Int. Cl.: B02C 23/24, B02C 21/00

(54) **Mahlanlage und Vefahren zur Vermahlung von Rohmaterialien**
Method and plant for millling raw materials
Procédé et installation de broyage de matières premières

(30) Priorität: 11.08.1998 DE 19836323
(43) Veröffentlichungstag der Anmeldung: 16.02.2000
(73) Patentinhaber: Loesche GmbH, 40549 Düsseldorf (DE)
(72) Erfinder: Poeschl, Franz, 40627 Düsseldorf (DE)
(74) Vertreter: Heim, Hans-Karl

(56) Entgegenhaltungen:
- EP-A- 0 068 681
- EP-A- 0 154 281
- EP-A- 0 164 512
- EP-A- 0 634 219
- EP-A- 0 842 702
- DE-A- 2 930 524
- DE-A- 4 224 704

## Beschreibung

Die Erfindung betrifft eine Mahlanlage gemäß dem Oberbegriff des Anspruchs 1, insbesondere eine Anlage zur Herstellung von Zement, und ein Verfahren zur Zementherstellung gemäß dem Oberbegriff des Anspruchs 13.

Aus EP 0 164 512 A1 ist eine Mahlanlage sowie ein Mahlverfahren bekannt, bei denen im Düsenring einer Luftstrom-Wälzmühle durch Einstellung von Luftmenge und Luftgeschwindigkeit eine Vorklassifizierung erfolgen soll. Durch eine mechanische Fördereinrichtung werden die in einer definierten Menge und Kornzusammensetzung durch den Düsenring nach unten ausfallenden, groben Bestandteile hoch gefördert und einer Nachklassifizierung unterworfen, wobei wenigstens eine Teilfraktion als Fertigprodukt abgezogen wird. Die Feinanteile werden in üblicher Weise mit dem Luftstrom aus der Mühle ausgetragen. Das Mahlverfahren und die Anlage betreffen somit die gleichzeitige Erzeugung von wenigsten zwei Fertigprodukten verschiedener Feinheit.

Bei der Herstellung von Zement werden Rohmaterial-Mahltrocknungsanlagen im Verbund mit einem Klinkerbrennprozess betrieben, um die in einem Zement-Drehrohrofen gebildeten Abgase nach Wärmetauschern einer weiteren Wärmeausnutzung zuzuführen.

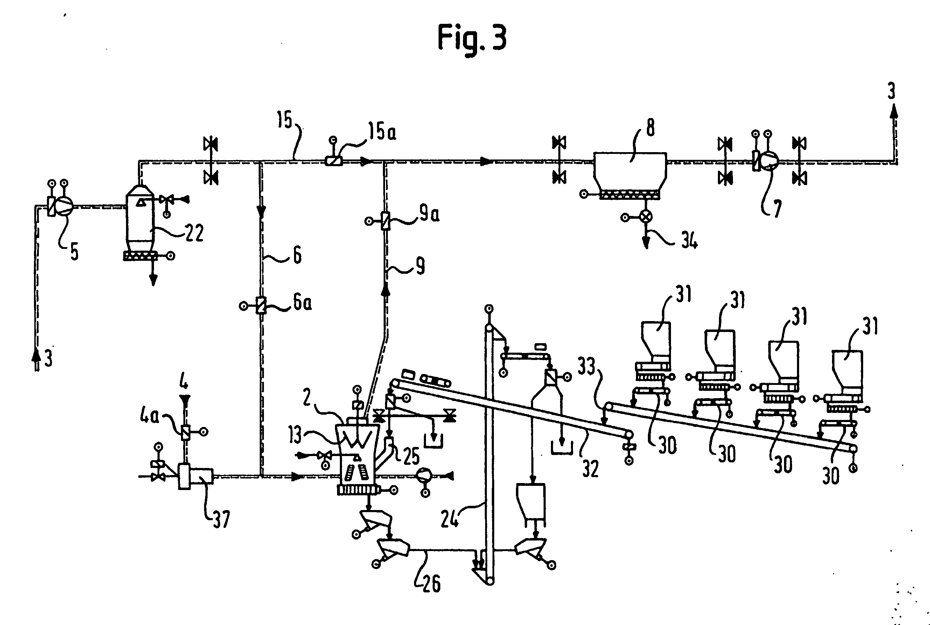

Ein bekanntes Mahlsystem geht aus einem Schaltungsbild gemäß Fig. 3 hervor. Abgase 3 aus einem Kalzinierprozess werden von einem Ofenventilator 5 in einer Abgasrohrleitung 6 über eine Absperreinrichtung 6a einer Wälzmühle 2 zugeführt. Als Ofenventilator 5 wird hier der Ventilator bezeichnet, der einer Mühle einen Gasstrom zuleitet. In Verbundschaltungen von Zement-Drehrohröfen und Wärmetauschern WT mit einer Luftstrom-Wälzmühle leitet der Ofen- bzw. Ofen-/WT-Ventilator den Ofengasstrom und Wärmestrom einer Wälzmühle, z.B. einer Luftstrom-Wälzmühle zu. Als Mühlenventilator, worunter der Ventilator zu verstehen ist, welcher den für die Mühle erforderlichen Gasstrom fördert, ist in Durchströmrichtung hinter einem als Staubabscheider funktionierenden Filter 8 ein Ventilator 7 angeordnet.

Dieser Ventilator 7 führt das Abgas 3 mit in der Wälzmühle 2 anfallendem Feingut 34 über eine Staub-Abgas-Rohrleitung 9, in welcher eine Absperreinrichtung 9a angeordnet ist, dem Filter 8 zu. Das im Filter 8 abgeschiedene Feingut 34 wird über nicht dargestellte Transportsysteme in Silos gefördert. Das vom Staub befreite Abgas 3 wird mit Hilfe des Mühlenventilators 7, welcher dem Filter 8 nachgeschaltet ist, einem Kamin (nicht dargestellt) zugeführt und ausgestoßen.

Im Verbundbetrieb, in welchem die Mahlanlage "on line" mit einem Zement-Drehrohrofen (nicht dargestellt) gefahren wird, bleibt eine Absperreinrichtung 15a in einer Bypass-Leitung 15 geschlossen. Nicht nutzbare Wärmeenergie wird in einem Kühlturm 22, welcher in der Regel nach dem Ofenventilator 5 angeordnet wird, oder in der Wälzmühle 2, beispielsweise durch Wassereinspritzung, vernichtet.

Einzelkomponenten einer Rohmaterial-Mischung 33 werden aus Bunkern 31 über Wiegebänder 30 einem Aufgabeband 32 zugeführt und der Wälzmühle 2 aufgegeben. Als Aufgabeeinrichtung richtung kann eine Klappenschleuse 25 vorgesehen sein, welche als Luftabschluß wirkt. In der Wälzmühle 2 abgeschiedenes Grobmaterial 26 wird über eine Fördereinrichtung 24 der Rohmaterialmischung 33 wenigstens teilweise zugemischt und der Wälzmühle 2 wieder zugeführt.

Im Verbundbetrieb wird die Mahlanlage nach Fig. 3 derart betrieben, daß der Druck-Nullpunkt, d.h. der Punkt atmosphärischen Drucks, kurz vor dem Eintritt der Abgase in die Wälzmühle 2 gelegt ist, so daß die Wälzmühle 2, ein integrierter Sichter 13 und das Filter 8 unter einem relativ hohen Unterdruck arbeiten und entsprechende Abdichtungseinrichtungen und stabile Konstruktionen erforderlich sind, was nachfolgend noch ausgeführt wird.

Im Direktbetrieb ist die Mahlanlage nach Fig. 3 außer Betrieb, und nur der Zement-Drehrohrofen (nicht dargestellt) wird betrieben. Im Filter 8 wird bei Verbundbetrieb der von der Mühle 2 erzeugte Staub und der Reststaub aus dem Wärmetauscher abgeschieden. Deshalb spricht man auch von "Filteranlage". Im Direktbetrieb wird hingegen nur der Reststaub aus dem Abgas 3 aus dem Wärmetauscher (nicht dargestellt) abgeschieden. Die Absperreinrichtung 6a in der Abgasrohrleitung 6 und die Absperreinrichtung 9a in der Staub-Abgas-Rohrleitung 9 sind dann geschlossen, und der Abgasstrom 3 vom Kalzinierprozeß wird nach dem Kühlturm 22 direkt über die Bypass-Leitung 15 in das Filter 8 geleitet, entstaubt und anschließend über den nachgeschalteten Mühlenventilator 7 und einen Kamin (nicht dargestellt) in die Atmosphäre gefördert. Im Direktbetrieb fungiert der Ventilator 7 als Abgasventilator für den Wärmetauscher.

Zur Produktion von Zement-Rohmaterial unabhängig vom KalzinierprozeB, z.B. bei Stillständen des Zement-Drehrohrofens oder bei Neuinbetriebnahmen, wird, da kein Abgas zur Verfügung steht, Frischluft 4 über eine Regelklappe 4a und einen Heißgaserzeuger 37 der Wälzmühle 2 zugeführt. Die Absperreinrichtungen 6a und 15a in der Abgas-Rohrleitung 6 und in der Bypass-Leitung 15 sind dann geschlossen, während die Absperreinrichtung 9a in der Staub-Abgas-Rohrleitung 9 zwischen der Wälzmühle 2 und dem Filter 8 geöffnet ist.

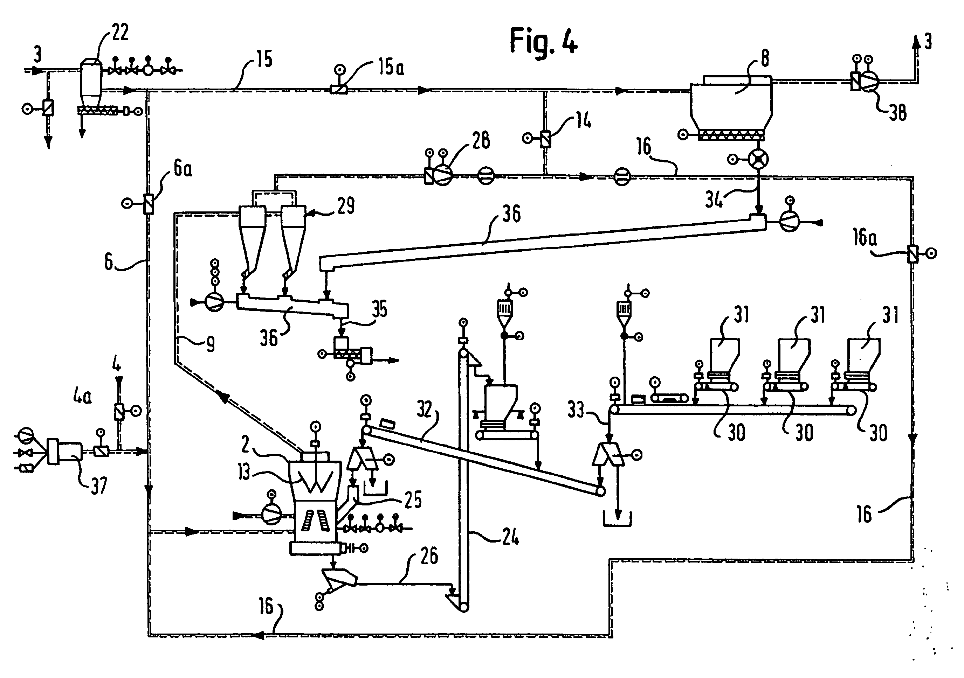

Ein Schaltungsbild eines weiteren Rohmaterial-Mahltrocknungssystems, welches auch als "Drei-Gebläse-Version" bezeichnet wird, ist in Fig. 4 gezeigt. Für identische Merkmale wurden die gleichen Bezugszeichen wie in Fig. 3 verwendet. Ein erstes Gebläse, welches dem Ofenventilator 5 der Fig. 3 entspricht, jedoch nicht dargestellt ist, befindet sich in Strömungsrichtung vor einem Kühlturm 22. Es fördert die Abgase 3 aus dem Kalzinierprozeß zu einer Wälzmühle 2. Ein zweites Gebläse 28, welcher als Mühlenventilator wirkt, befindet sich hinter einer Zyklon-Batterie 29 und fördert einen Teilgasstrom über eine Rückführleitung 16 zurück in die Wälzmühle 2. Der verbleibende Teil der Abgase aus der Zyklon-Batterie 29 wird über eine Regel- und Absperreinrichtung 14 einem Filter 8 zugeführt. Nach dem Filter 8 ist ein drittes Gebläse 38 als Abgasventilator angeordnet, welches die restlichen Abgase 3 in einen Kamin (nicht dargestellt) als Filterabgas fördert. Das in der Zyklon-Batterie 29 und im Filter 8 anfallende Feingut 34, 35 wird über entsprechende Fördereinrichtungen 36 einem Silo (nicht dargestellt) zugeführt. Zu den Einrichtungen zur Herstellung und Zuführung einer Rohmaterial-Mischung 33 zur Wälzmühle 2 wird auf die Ausführungen zur Fig. 3 verwiesen.

Die Mahltrocknungsanlage nach Fig. 4 kann unabhängig vom Gas- und Wärmehaushalt des Verbundsystems arbeiten. Durch eine Bypass-Leitung 15 können überschüssige Abgas- und Wärmeströme aus dem Ofen- und Kalzinierprozeß der Wälzmühle 2 mit Sichter 13 und der Zyklon-Batterie 29 bygepasst und gemeinsam mit den Abgasen aus der Wälzmühle 2 in der nachgeschalteten Filteranlage 8 entstaubt werden.

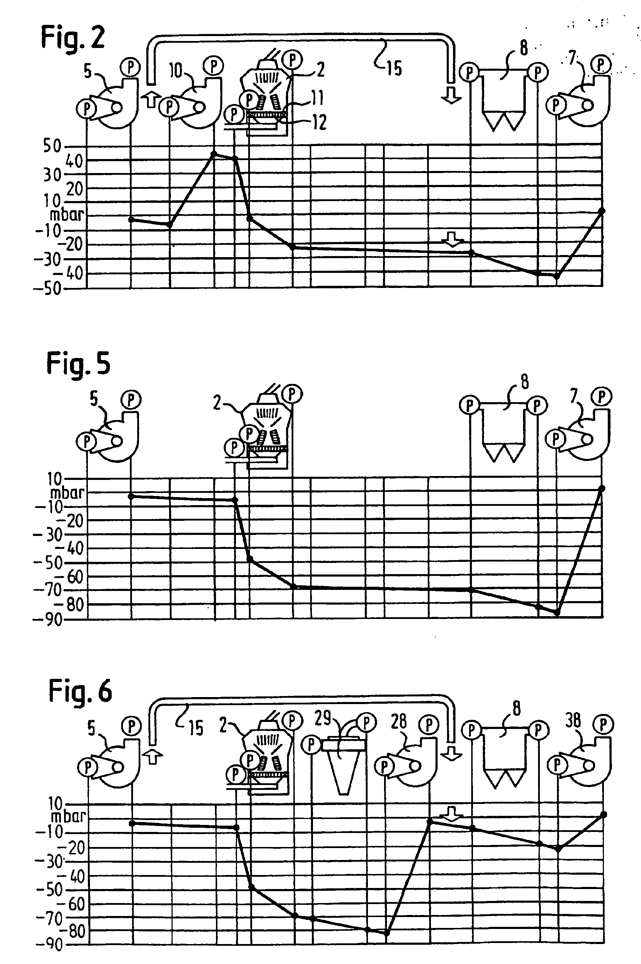

In Fig. 6 ist ein beispielhafter Druckverlauf der Verbund-Schaltungsvariante der Anlage nach Fig. 4 dargestellt. Die wesentlichen Einrichtungen sind mit entsprechender Zuordnung oberhalb der Druckkurve gezeigt und mit Bezugszeichen der Fig. 4 versehen. Fig. 6 verdeutlicht, daß das Filter 8 in einem relativ niedrigen Unterdruckbereich arbeitet und deshalb gegen Falschlufteinbrüche nur mit einem relativ geringen Aufwand geschützt werden muß. Dagegen muß die Wälzmühle 2, welche mit Unterdruck um -50 bis -80 mbar betrieben wird, zur Vermeidung von Falschlufteinbrüchen nahezu "hermetisch" abgedichtet sein.

Nachteile resultieren auch aus der Zyklon-Batterie 29, welche mit einem relativ hohen Baukosten- und Platzaufwand verbunden ist und einem Verschleiß unterliegt, so daß ausserdem noch hohe Wartungskosten anfallen.

Ein hoher Abscheidungsgrad in der Zyklon-Batterie 29 erfordert zudem einen relativ hohen Energieaufwand, und als weiterer Nachteil der bekannten Anlage ist die Spaltung des Endproduktes in groberes Feingut 35 aus den Zyklonen und feineres Produkt 34 aus dem Filter 9 anzusehen (Fig. 4).

Die Flexibilität der Mahlanlage ist eingeschränkt, weil der Abscheidegrad der Zyklon-Batterie 29 mit dem Lastzustand (= Gasstrom) der Mühle gekoppelt ist. Bei Teillast sinkt der Abscheidegrad der Zyklone. Dadurch steigt der Reststaubgehalt in der Leitung 39 nach der Zyklon-Batterie 29 zum Mühlenventilator 28, was zu Verschleißerscheinungen führt.

Die Mahltrocknungsanlage nach Fig. 3 weist zwar eine einfachere Rohrleitungsführung, einen geringeren Energieaufwand und aufgrund einer kompakten Anlagenbauweise relativ niedrige Investitionskosten auf. Wie aus dem in Fig. 5 dargestellten beispielhaften Druckverlauf der Verbund-Schaltungsvariante der Anlage nach Fig. 3 hervorgeht, ist das Filter 8 jedoch in den Unterdruckbereich der Wälzmühle 2, welcher etwa -70 bis -90 mbar beträgt, einbezogen und muß deshalb konstruktiv und sicherheitstechnisch entsprechend ausgelegt werden. Filtergehäuse sind bei großtechnischen Mahlanlagen von erheblicher Größe. Die Filtergehäuse müssen für betriebliche Unterdrücke von nahezu -100 mbar und für einen Start mit Kaltluft aus Sicherheitsgründen bis zu -140 mbar ausgelegt sein. Es bedarf erheblicher konstruktiver und fertigungstechnischer Maßnahmen, um die erforderliche Steifigkeit zu erreichen und ein Kollabieren auszuschliessen. Selbst durch kleine Risse im Gehäuse saugt der nachgeschaltete Mühlenventilator 7 Falschluft in die Anlage, welches sich als Verlust auf das Mühlenabgas auswirkt und zu Funktionsstörungen führt.

Auch Druckschwankungen, welche im erhöhten Unterdruckbereich nicht zu vermeiden sind, führen zu hohen mechanischen Belastungen des Filtergehäuses und hoher Anfälligkeit gegen Rißbildung und damit zu Falschlufteinbrüchen. Diese beeinflussen direkt die Leistung der Wälzmühle. Auch die nicht "hermetisch" abgedichteten Stellen der Wälzmühle und des Sichters sowie entsprechender Bereiche im Gesamtsystem sind potentielle Quellen für Falschlufteinbrüche. Die Schadstellen sind zudem wegen einer geschlossenen Isolierung von außen nicht lokalisierbar.

Ein weiterer Nachteil ist darin zu sehen, daß die Abgase 3 aus der Wärmetauschereinheit des Kalzinierprozesses während des Verbundbetriebes durch die Wälzmühle 2 gezogen werden müssen und ein Bypassen der Abgase nicht möglich ist (siehe auch Fig. 3).

Außerdem kann die Gastemperatur im Entstaubungsfilter 8 nicht unabhängig von der Mühlenabgastemperatur gehalten werden. Diese Abhängigkeit kann einzeln und zusammen mit Falschlufteinbrüchen zu lokaler Taupunktunterschreitung und somit zu Korrosionserscheinungen im Filter- und Rohrleitungsbereich führen. Während des Mühlenbetriebs können außerdem keine anderen Gase als die von der Wälzmühle 2 kommenden entstaubt werden.

Der Erfindung liegt die Aufgabe zugrunde, eine Mahlanlage und ein Verfahren zur Vermahlung von Rohmaterialien, insbesondere eine Anlage und ein Verfahren zur Zementherstellung zu schaffen, welche bei einem besonders geringen Investitions- und Wartungsaufwand eine variable Verfahrensführung und einen außerordentlich effizienten Mahlprozeß, insbesondere eine effiziente Zementproduktion gewährleisten.

Vorrichtungsmäßig wird die Aufgabe durch eine Mahlanlage, z.B. durch eine Anlage zur Herstellung von Zement mit einer Wälzmühle, einem Zement-Drehrohrofen mit einer Wärmetauschereinheit, einem Ofenventilator und einem Abgasventilator hinter einem Filter gelöst, in welcher ein Mühlenventilator vor der Wälzmühle angeordnet ist, welcher den hohen Widerstand des Schaufelkranzes der Wälzmühle überwindet und einen für einen Mahltrocknungsprozeß erforderlichen Abgas- oder auch Luftstrom durch den Schaufelkranz der Wälzmühle drückt und im Zusammenwirken mit dem Abgasventilator einen vorteilhaften Druckverlauf vor, innerhalb und nach der Wälzmühle bis zu dem Filter ermöglicht.

Nach der Erfindung wird verfahrensmäßig mit dem vor der Mühle angeordneten und somit vorgeschalteten Mühlenventilator der Druck-Nullpunkt, d.h. der atmosphärische Druck, in die Wälzmühle hineingezwungen und in dem Bereich des Schaufelkranzes und der Mahlschüssel, insbesondere in einem oberen Bereich des Schaufelkranzes bis zu einer oberen Kante der Mahlschüssel, betrieblich sicher gehalten. In dem Mahlraum der Wälzmühle oberhalb der Mahlschüssel und des Schaufelkranzes einschließlich an den Durchtritten für die Hebel und/oder Federstangen, im Sichter und in dem Filter wird ein minimaler Unterdruck über den Abgasventilator eingestellt, während in Strömungsrichtung vor dem Schaufelkranz, insbesondere im Mühlenunterteil, durch den Mühlenventilator Überdruck erzeugt wird.

Indem gemäß der Erfindung geringere Unterdrücke als in den bekannten Mahltrocknungsanlagen eingestellt werden können, wird vorteilhaft erreicht, daß von den bekannten stabilen, material- und kostenaufwendigen Bauweisen des Filters oder der Zyklone und weiterer Einrichtungen der Mahlanlage abgegangen werden kann und ein wesentlicher Anteil der Falschluftquellen beseitigt ist.

Die Anordnung eines Mühlenventilators vor einer Wälzmühle ist an sich von Kohlemahlanlagen bekannt. Der Mühlenventilator ist dort jedoch der einzige Ventilator in dem Kohlemahlsystem. Zudem stehen der Mahlraum, Sichtraum und z.B. die nachfolgenden Brennerleitungen und Kohlenstaub-/Luftgemischbrenner unter Überdruck.

Gemäß der Erfindung dient der vorgeschaltete Mühlenventilator in einer Verbund-Zementrohmaterial-Mahlanlage mit Mahltrocknungsprozeß dazu, das Druckniveau so zu verschieben, daß im Zusammenwirken mit dem Abgasventilator im Mühleninnenraum ein deutlich geringerer Unterdruck bis zum Umgebungsdruck entsteht. Die Gesamtleistung der Ventilatoren der Mahltrocknungsanlage, d.h. des Mühlenventilators und des Abgasventilators nach der Filteranlage, wird auf die Ventilatoren verteilt und fällt wegen der erreichten geringeren Falschluftanteile niedriger aus. Das Mühlenunterteil steht unter Überdruck. Das Filter kann bei einem deutlich niedrigeren Unterdruck als dem bisher üblichen gemäß Schaltung nach Fig. 3 betrieben werden.

Vorteilhafterweise kann daher die Konstruktion des Filtergehäuses zum Auffangen von Flächenpressung wesentlich vereinfacht werden.

Der Gasstrom durch die Wälzmühle wird durch den vorgeschalteten Mühlenventilator geregelt. Es ist vorteilhaft, daß die Regelung eines Bypass-Abgasstromes wegen des geringeren Druckgefälles bis zum Filter problemlos durch den Abgasventilator möglich ist. Wegen des verminderten Druckniveaus vor dem Filter können auch Entstaubungseinrichtungen an die Leitung zwischen der Wälzmühle und dem Filter angeschlossen werden.

Wesentliche Vorteile der erfindungsgemäßen Anlage und des Verfahrens mit einem definierten Druckverlauf im Mühlensystem sind der Wegfall von aufwendigen Abdichtungen gegen Falschlufteinbrüche im Bereich der Wälzmühle, z.B. im Bereich der Materialaufgabe, Energieeinsparungen aufgrund der vermiedenen Falschlufteinbrüche, verringerte Investitions- und Betriebskosten sowie eine flexible Verfahrensführung im Verbund und die Möglichkeit, auch anderer Abgase in der gleichen Filteranlage entstauben zu können. Eine erhebliche Kosteneinsparung wird vor allem durch die mögliche leichtere Bauweise des Filtergehäuses bzw. den Wegfall der Zyklone erreicht.

Neben der Einsparung von Investitionskosten werden Wartungskosten sowie Kosten für erhöhte Energieverbräuche vermieden.

Die Erfindung kann nicht nur bei Zementrohmaterial-Mahlanlagen vorteilhaft angewendet werden. Es liegt im Rahmen der Erfindung, eine Mahlanlage auch ohne einen vorgeschalteten Prozeß, z.B. eine sogenannte Zentralmahlanlage, mit einem vorgeschalteten Mühlenventilator zu betreiben, um das Druckniveau vom Unterdruckbereich in den Überdruckbereich bis in den Mahlraum der Mühle zu verlagern und über einen Ventilator nach Filter, einem Abgasventilator, Unterdruck zu erzeugen. In Strömungsrichtung gesehen steht dann der untere Mahlraum bis zum Ansaugstutzen des Abgasventilators unter einem geringeren Unterdruck als in herkömmlichen Mahlanlagen.

Die Vorteile sind wie bei einer Zementrohmaterial-Mahlanlage erhebliche Energie- und Investitionskosteneinsparungen, Vermeidung von Falschlufteinbrüchen, von Wartungskosten sowie eine variable Verfahrensführung.

Eine erfindungsgemäße Mahlanlage, bei welcher ein vorgeschalteter Mühlenventilator mit einem Abgasventilator zusammenwirkt, kann zur Mahlung von unterschiedlichsten Rohmaterialien wie Klinker, Hüttensand, Kohle und alle anderen Arten von Mineralien und Gesteinen angewendet werden. Bei den sogenannten Filteranlagen bedeutet die Verwendung eines Ventilators vor der Mühle, daß zu einem Abgasventilator ein zusätzlicher Ventilator eingesetzt wird. Bei den bisher üblichen Filteranlagen arbeitet der Ventilator, der hinter dem Filter angeordnet ist, sowohl als Mühlenventilator als auch als Abgasventilator. Die vorstehenden beschriebenen Vorteile des mit einem vorgeschalteten Mühlenventilator durchführbaren MPL-Verfahrens (Modified Pressure Level-Verfahren) lassen die Zusatzinvestition eines Ventilators jedoch als äußerst gering erscheinen.

Die Erfindung wird nachstehend anhand einer Zeichnung weiter erläutert; in dieser zeigen
- Fig. 1: ein Anlagenschema einer erfindungsgemäßen Mahlanlage und
- Fig. 2: eine schematische Darstellung eines beispiel- haften Druckverlaufs der erfindungsgemäßen Verbund-Schaltungsvariante gemäß Fig. 1.
- Fig. 3 und 4: zeigen Anlagen- und Schaltungsbilder des Standes der Technik und
- Fig. 5 und 6: die zugehörigen beispielhaften Druckverläufe.

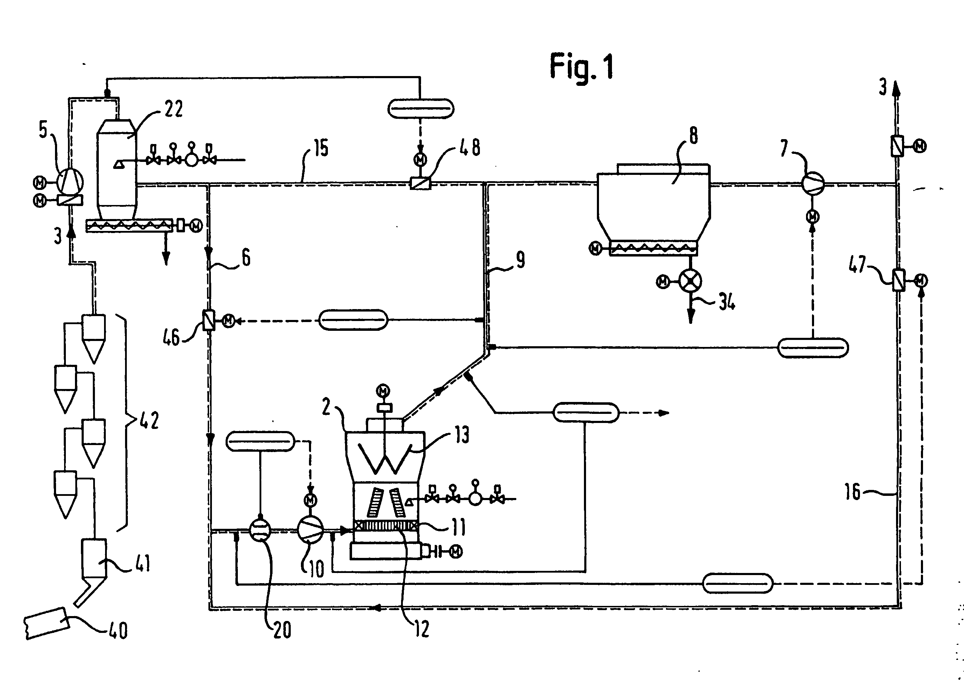

In Fig. 1 ist ein Schaltungsbild einer Anlage zur Zementherstellung mit einem Kalzinierprozeß und Mahltrocknungsprozeß dargestellt.

Abgase 3 aus einem Zement-Drehrohrofen 40 werden über einen Vorkalzinierer 41, einer Wärmetauschereinheit 42 und einem Ofenventilator 5 sowie einem Kühlturm 22 in einer Abgas-Rohrleitung 6 einem Mahltrocknungsprozeß mit einer Wälzmühle 2 und einem Filter 8, zugeführt. Als Filter 8 kann ein Schlauch- oder Elektrofilter eingesetzt sein.

Vor der Wälzmühle 2 mit einer Mahlschüssel 12 und einem Schaufelkranz 11 bzw. Düsenring in einem Mahlraum und einem integrierten Sichter 13 in einem Sichtraum ist ein Mühlenventilator 10 oder Mühlengebläse angeordnet, mit welchem das Druckniveau im Bereich der Anlagenteile Wälzmühle 2 und Filter 8 angehoben wird.

Die Gesamtleistung der Mahlanlage wird auf den vorgeschalteten Mühlenventilator 10 und den Abgasventilator 7 verteilt und ist nicht größer, sondern aufgrund der geringeren Falschluftanteile niedriger.

Der vorgeschaltete Mühlenventilator 10 drückt einen für den Mahltrocknungsprozeß erforderlichen Abgasstrom durch den Schaufelkranz 11 und vermeidet dadurch, daß der Schaufelkranz 11 als Widerstand für den Abgasventilator 7 wirkt und ein großes Unterdruckgefälle zur Atmosphäre im Mühlenoberteil und in den anschließenden Anlagenteilen, insbesondere im Filter 8 aufgebaut wird. Je höher dieser Unterdruck ansteigt, um so mehr Falschluft kann in das System eingesogen werden und um so weniger Abgas wird durch den Schaufelkranz 11 gezogen.

Durch Verschiebung des Druckniveaus wird der Prozentsatz an Falschluft in dem System erheblich reduziert. Neben den energetischen und verfahrenstechnischen Vorteilen kann insbesondere das Gehäuse des Filters 8 leichter und damit kostengünstiger hergestellt werden.

In der Abgasrohrleitung 6 befindet sich eine Regel- und Absperreinrichtung 46, beispielsweise eine Drosselklappe, welche nicht nur bei Betriebsstillstand der Wälzmühle 2 ein Bypassen der Abgase 3 über eine Bypass-Leitung 15 und eine Entstaubung im Filter 8 erlaubt.

Vor dem vorgeschalteten Mühlenventilator 10 ist eine Gasstrom-MeBeinrichtung 20 angeordnet, deren Meßwerte zur Regelung des Mühlenventilators 10 herangezogen werden.

Die Einrichtungen und Anlagenteile zur Herstellung einer Rohmaterialmischung und Zuführ- und Aufgabeeinrichtungen zur Wälzmühle 2 sind in Fig. 1 nicht dargestellt. Sie können analog zu den Anlagen gemäß Figuren 3 und 4 ausgebildet sein.

Eine Staub-Abgasrohrleitung 9 führt von der Wälzmühle 2 zum Filter 8. Das in dem Filter 8 anfallende Feingut 34 wird über nicht dargestellte Transporteinrichtungen in Silos gefördert. Das entstaubte Abgas 3 kann zumindest teilweise über eine Rückführleitung 16 über den Mühlenventilator 10 der Wälzmühle 2 wieder zugeführt werden. Wenn eine regelbare Absperreinrichtung 47 in der Rückführleitung 16 geschlossen ist, werden die entstaubten Abgase 3 über einen Kamin in die Atmosphäre geleitet. Fig. 1 zeigt die Möglichkeiten zur Regelung der Absperr- und Regeleinrichtung 46 in der Abgasrohrleitung 6, einer Regel- und Absperreinrichtung 48 in der Bypass-Leitung 15, der Regel- und Absperreinrichtung 47 in der Rückführleitung 16 und in der Staub-Abgasrohrleitung 9.

Der definierte Druckverlauf, welcher mit einem vorgeschalteten Mühlenventilator 10 im Zusammenwirken mit einem Abgasventilator 7 in der Mahltrocknungsanlage gemäß Fig. 1 erreicht werden kann, ist beispielhaft in Fig. 2 gezeigt.

Oberhalb der Druckkurve sind die wesentlichen Anlagenteile, ein Ofenventilator 5, der vorgeschaltete Mühlenventilator 10, die Wälzmühle 2 und das Filter 8 sowie der Abgasventilator 7 dargestellt. Fig. 2 verdeutlicht das modifizierte Druckniveau vor, innerhalb und nach der Wälzmühle 2 sowie im Filter 8. Ein Vergleich mit den beispielhaften Druckverläufen der bekannten Anlagensysteme, welche in den Figuren 5 und 6 dargestellt sind, zeigt, daß bei den bekannten Mahlsystemen unmittelbar vor Eintritt des Gasstroms in die Wälzmühle 2 ein Unterdruck von ca. -5 bis -7 mbar und in der Wälzmühle 2 ein Unterdruck im Bereich -50 bis -70 mbar herrscht. Besonders nachteilig ist der Unterdruck im Elektrofilter bei der bekannten Anlage gemäß Fig. 3 und Fig. 5, welcher um -90 mbar liegt.

Fig. 2 verdeutlicht, daß mit dem vorgeschalteten Mühlenventilator 10 unmittelbar vor der Wälzmühle 2 bzw. im Mühlenunterteil und vor dem Schaufelkranz 11 ein Überdruck, z.B. von etwa 40 mbar, eingestellt werden kann. Der Druck-Nullpunkt liegt betrieblich sicher in einem oberen Bereich des Schaufelkranzes 11 bis zu einer oberen Kante der Mahlschüssel 12. Im Mahl- und Sichtraum herrscht im Beispiel nach Fig. 2 ein Unterdruck von etwa -3 bis -25 mbar und im Filter 8 lediglich ein Unterdruck von etwa -40 mbar.

Das erfindungsgemäße MPL-Verfahren (Modified Pressure Level) ist somit durch ein verschobenes Druckniveau vor, innerhalb und nach der Wälzmühle 2 gekennzeichnet, welches mit dem vorgeschalteten Mühlenventilator 10 im Zusammenwirken mit dem Abgasventilator 7 erreicht wird und zu außerordentlichen Einsparungen von Investitions- und Energiekosten, Wartungskosten und zu einer besonders effizienten Zerkleinerung von Rohstoffen und insbesondere zu einer effizienten Zementherstellung führt.

## Patentansprüche

1. Mahlanlage
mit einer Wälzmühle (2), insbesondere einer Luftstrom-Wälzmühle, mit einer Mahlschüssel (12), einem Schaufelkranz (11) und einem Sichter (13) und mit einem Ventilator (7), welcher nach einem Filter (8) angeordnet ist und das Filter (8), die Wälzmühle (2) und eine Staub-Gas-Rohrleitung (9) zwischen dem Filter (8) und der Wälzmühle (2) mit Unterdruck beaufschlagt, sowie mit einem Mühlenventilator (10) vor der Wälzmühle (2), welcher den erforderlichen Gasstrom in die Wälzmühle (2) drückt,
**dadurch gekennzeichnet,**
**dass** ein vorgebbares Druckniveau vor, innerhalb und nach der Wälzmühle (2) von dem Mühlenventilator (10) und dem Abgasventilator (7) einstellbar ist und der Druck-Nullpunkt in den Bereich des Schaufelkranzes (11) und der Mahlschüssel (12) legbar ist.

2. Anlage zur Herstellung von Zement,
mit einer Wälzmühle (2), in welcher in Verbundschaltung mit einem Zement-Drehrohrofen (40) und einer Wärmetauschereinheit (42) Zement-Rohmaterial mit Abgasen (3) des Zement-Drehrohrofens (40) einer Mahltrocknung unterzogen wird, mit einem Ofenventilator (5), welcher nach der Wärmetauschereinheit (42) angeordnet ist und die Abgase (3) aus dem Zement-Drehrohrofen (40) einer Abgas-Rohrleitung (6) zuführt, und mit einem Abgasventilator (7), welcher nach einem Filter (8) angeordnet ist und das Filter (8), die Wälzmühle (2) mit einem Schaufelkranz (11), einer Mahlschüssel (12) und einem Sichter (13) sowie eine Staub-Abgas-Rohrleitung (9) zwischen dem Filter (8) und der Wälzmühle (2) mit Unterdruck beaufschlagt,
**dadurch gekennzeichnet,**
**dass** ein Mühlenventilator (10) vor der Wälzmühle (2) angeordnet ist und den erforderlichen Gasstrom in die Wälzmühle (2) drückt, und dass ein vorgebbares Druckniveau vor, innerhalb und nach der Wälzmühle (2) einstellbar und der Druck-Nullpunkt in den Bereich des Schaufelkranzes (11) und der Mahlschüssel (12) legbar ist.

3. Mahlanlage nach Anspruch 1 oder Anlage nach Anspruch 2,
**dadurch gekennzeichnet,**
**dass** in einem oberen Bereich des Schaufelkranzes (11) bis zu einer oberen Kante der Mahlschüssel (12) der Druck-Nullpunkt bzw. ein minimaler Unterdruck einstellbar ist.

4. Mahlanlage nach Anspruch 1, 3 oder Anlage nach einem der Ansprüche 2, 3,
**dadurch gekennzeichnet,**
**dass** mit dem vorgeschalteten Mühlenventilator (10) vor und innerhalb der Wälzmühle (2) unterhalb des Schaufelkranzes (11) ein Überdruck und oberhalb der Mahlschüssel (12) und im Bereich des Sichters (13), welcher in die Wälzmühle (2) integriert ist, ein Unterdruck einstellbar ist.

5. Mahlanlage nach einem der Ansprüche 1, 3, 4 oder Anlage nach einem der Ansprüche 2 bis 4,
**dadurch gekennzeichnet,**
**dass** in dem Filter (8) ein Unterdruck einstellbar ist und das Filter (8) eine relativ leichte Gehäusekonstruktion aufweist.

6. Mahlanlage nach einem der Ansprüche 1, 3 bis 5 oder Anlage nach einem der Ansprüche 2 bis 5,
**dadurch gekennzeichnet,**
**dass** die Wälzmühle (2) vereinfachte Abdichtungen, insbesondere im Bereich der Rohmaterial-Aufgabe und der Durchtritte bewegter Teile durch das Mühlengehäuse aufweist.

7. Mahlanlage nach einem der Ansprüche 1, 3 bis 6 oder Anlage nach einem der Ansprüche 2 bis 6,
**dadurch gekennzeichnet,**
**dass** Entstaubungseinrichtungen an die Staub-Abgas-Rohrleitung (9) anschließbar sind.

8. Anlage nach einem der Ansprüche 2 bis 7,
**dadurch gekennzeichnet,**
**dass** eine Bypass-Leitung (15) zur Zuführung von Abgasen (3) aus dem Zement-Drehrohrofen (40) vorgesehen ist und dass die Bypass-Leitung (15) in Strömungsrichtung vor einer Regel- und Absperreinrichtung (46) von der Abgas-Rohrleitung (6) abzweigt.

9. Anlage nach einem der Ansprüche 2 bis 8,
**dadurch gekennzeichnet,**
**dass** der Gasstrom zum Filter (8) weitestgehend unabhängig vom Gasstrom durch die Wälzmühle (2) hinsichtlich Volumenstrom und Gastemperatur konditionierbar ist.

10. Anlage nach einem der Ansprüche 2 bis 9,
**dadurch gekennzeichnet,**
**dass** nach dem Filter (8) zur Rückführung regelbarer Gasströme in die Wälzmühle (2) eine Rückführleitung (16) angeordnet ist.

11. Anlage nach Anspruch 10,
**dadurch gekennzeichnet,**
**dass** in der Abgas-Rohrleitung (6) sowie in der Bypass-Leitung (15) und in der Rückführleitung (16) Regel- und Absperreinrichtungen (46, 47, 48) angeordnet sind.

12. Mahlanlage nach einem der Ansprüche 1, 3 bis 7 oder Anlage nach einem der Ansprüche 2 bis 11,
**dadurch gekennzeichnet,**
**dass** eine Gasstrommesseinrichtung (20) vor dem Mühlenventilator (10) in der Zuführleitung zur Wälzmühle (2) angeordnet ist.

13. Verfahren zur Herstellung von Zement in einem Verbundsystem, bei welchem eine Rohmaterial-Mischung (33) in einer Wälzmühle (2) unter Zufuhr von Abgasen (3) aus einem Kalzinierprozess einer Mahltrocknung unterzogen, gesichtet und als Staub-Abgas-Gemisch einem Filter (8) zur Staubabtrennung aus dem Abgas (3) zugeführt wird und die Abgase (3) mit Hilfe eines Ofenventilators (5) nach dem Kalzinieren und Vorwärmen von Rohmehl sowie mit einem Ventilator (7) nach einem Filter (8) durch die Wälzmühle (2) und das Filter (8) in einer Verbundschaltung geführt werden, insbesondere in einer Anlage nach einem der Ansprüche 2 bis 12,
**dadurch gekennzeichnet,**
**dass** eine regelbare Abgasmenge mit einem Mühlenventilator (10) vor der Wälzmühle (2) in die Wälzmühle (2) und durch deren Schaufelkranz (11) gedrückt wird, dass der Druck-Nullpunkt in die Ebene des Schaufelkranzes (11) und der Mahlschüssel (12) der Wälzmühle (2) gelegt wird und dass oberhalb des Schaufelkranzes (11) bis in das Filter (8) ein geringer Unterdruck eingestellt wird.

14. Verfahren nach Anspruch 13,
**dadurch gekennzeichnet,**
**dass** vor und unterhalb des Schaufelkranzes (11) der Wälzmühle (2) durch den vorgeschalteten Mühlenventilator (10) ein Überdruck von beispielsweise 40 bis 50 mbar eingestellt wird.

15. Verfahren nach Anspruch 13 oder 14,
**dadurch gekennzeichnet,**
**dass** im Bereich des Schaufelkranzes (11) und der Mahlschüssel (12) ein Unterdruck, insbesondere von etwa -3 bis -5 mbar, und im Bereich des Sichters (13), der Staub-Abgas-Rohrleitung (9) sowie in dem Filter (8) ein Unterdruck von beispielsweise -25 bis -45 mbar eingestellt wird.

16. Verfahren nach einem der Ansprüche 13 bis 15,
**dadurch gekennzeichnet,**
**dass** das Abgas (3) aus dem Kalzinierprozess wenigstens teilweise in einer Bypass-Leitung (15) direkt dem Filter (8) zugeführt und unabhängig vom Gasstrom durch die Wälzmühle (2) hinsichtlich Volumenstrom und Gastemperatur konditioniert wird.

17. Verfahren nach einem der Ansprüche 13 bis 16,
**dadurch gekennzeichnet,**
**dass** das Abgas (3) nach dem Filter (8) und dem Anlagenventilator (7) wenigstens teilweise zur Mühle (2) zurückgeführt wird.

18. Verfahren nach einem der Ansprüche 13 bis 17,
**dadurch gekennzeichnet,**
**dass** durch den vorgeschalteten Mühlenventilator (10) das Druckniveau in der Wälzmühle (2) bis in den Filter (8) angehoben wird.

19. Verfahren nach einem der Ansprüche 13 bis 18,
**dadurch gekennzeichnet,**
**dass** Abgase (3) anderer Mahlsysteme dem Filter (8) zugeführt und entstaubt werden.

## Claims

1. Milling plant
with a roller mill (2), particularly an air-swept roller mill, having a milling pan (12), a blade ring (11) and a classifier (13) and having a fan (7) which is located downstream of a filter (8) and supplies a sub-atmospheric pressure to the filter (8), the roller mill (2) and a dust-gas pipe (9) between the filter (8) and the roller mill (2), as well as having a mill fan (10) positioned upstream of the roller mill (2), which forces the necessary gas flow into the roller mill (2),
**characterized in that**
a predeterminable pressure level can be set upstream, within and downstream of the roller mill (2) by the mill fan (10) and the exhaust gas fan (7) and that the pressure zero point can be located in the area of the blade ring (11) and the milling pan (12).

2. Plant for production of cement,
having a roller mill (2), in which in a combined circuit with a cement rotary kiln (40) and a heat exchanger unit (42) cement raw material undergoes mill drying with the aid of exhaust gases (3) of the cement rotary kiln (40), having a kiln fan (5) which is positioned downstream of the heat exchanger unit (42) and supplies the exhaust gases (3) from the cement rotary kiln (40) to an exhaust gas pipe (6), and with an exhaust gas fan (7) which is positioned downstream of a filter (8) and supplies a sub-atmospheric pressure to the filter (8), the roller mill (2) with a blade ring (11), a milling pan (12) and a classifier (13) as well as a dust-exhaust gas pipe (9) between the filter (8) and the roller mill (2),
**characterized in that**
a mill fan (10) is positioned upstream of the roller mill (2) and forces the necessary gas flow into the roller mill (2) and that a predetermined pressure level can be set upstream, within and downstream of the roller mill (2) and that the pressure zero point can be located in the area of the blade ring (11) and the milling pan (12).

3. Milling plant according to claim 1 or plant according to claim 2,
**characterized in that**
the pressure zero point or a minimal sub-atmospheric pressure can be set in an upper area of the blade ring (11), extending to an upper edge of the milling pan (12).

4. Milling plant according to claim 1, 3 or plant according to one of claims 2, 3,
**characterized in that**
with the upstream mill fan (10) upstream and within the roller mill (2) below the blade ring (11) can be set an overpressure and above the milling pan (12) and in the classifier (13) which is integrated into the roller mill (2), can be set a sub-atmospheric pressure.

5. Milling plant according to one of claims 1, 3, 4 or plant according to one of claims 2 to 4,
**characterized in that**
a sub-atmospheric pressure can be set in the filter (8) and that the filter (8) has a relatively lightweight housing construction.

6. Milling plant according to one of claims 1, 3 to 5 or plant according to one of claims 2 to 5,
**characterized in that**
the roller mill (2) has simplified seals, particularly in the area of the raw material feed and passages of moving parts through the mill housing.

7. Milling plant according to one of claims 1, 3 to 6 or plant according to one of claims 2 to 6,
**characterized in that**
dedusting devices can be connected to the dust-exhaust gas pipe (9).

8. Plant according to one of claims 2 to 7,
**characterized in that**
a bypass line (15) is provided for supplying exhaust gases (3) from the cement rotary kiln (40) and that the bypass line (15) branches off in flow direction from the exhaust gas pipe (6) upstream of a control and shutoff device (46).

9. Plant according to one of claims 2 to 8,
**characterized in that**
the gas flow to the filter (8) can be conditioned largely independently of the gas flow through the roller mill (2) with respect to volume flow and gas temperature.

10. Plant according to one of claims 2 to 9,
**characterized in that**
for the return of controllable gas flows to the roller mill (2) a return line (16) is positioned downstream of the filter (8).

11. Plant according to claim 10,
**characterized in that**
control and shutoff devices (46, 47, 48) are located in the exhaust gas pipe (6) as well as in the bypass line (15) and in the return line (16).

12. Milling plant according to one of claims 1, 3 to 7 or plant according to one of claims 2 to 11,
**characterized in that**
a gas flow measuring device (20) is located upstream of the mill fan (10) in the supply line to the roller mill (2).

13. Method for production of cement in a compound system, in which a raw material mixture (33) undergoes a mill drying in a roller mill (2), accompanied by the supply of exhaust gases (3) from a calcining process, followed by classification and supply as a dust-exhaust gas mixture to a filter (8) for dust separation from the exhaust gas (3) and the exhaust gases (3) are passed with the aid of a kiln fan (5) following calcining and preheating of raw material as well as with a fan (7) following a filter (8) through the roller mill (2) and the filter (8) in a combined circuit, particularly in a plant according to one of claims 2 to 12,
**characterized in that**
a controllable exhaust gas quantity is forced by a mill fan (10) located upstream of the roller mill (2) into the roller mill (2) and through the blade ring (11) thereof, that the pressure zero point is placed in the plane of the blade ring (11) and the milling pan (12) of the roller mill (2) and that above the blade ring (11) and extending into the filter (8) a low sub-atmospheric pressure is set.

14. Method according to claim 13,
**characterized in that**
an overpressure of e.g. 40 to 50 mbar is set upstream and below the blade ring (11) of the roller mill (2) with the aid of the upstream mill fan (10).

15. Method according to claim 13 or 14,
**characterized in that**
in the vicinity of the blade ring (11) and the milling pan (12) a vacuum is set, in particular of approximately -3 to -5 mbar, and in the classifier (13), the dust-exhaust gas pipe (9) as well as in the filter (8) a vacuum of e.g. - 25 to - 45 mbar is set.

16. Method according to one of claims 13 to 15,
**characterized in that**
the exhaust gas (3) from the calcining process is supplied at least partly in a bypass line (15) directly to the filter (8) and is conditioned independently of the gas flow through the roller mill (2) with respect to volume flow and gas temperature.

17. Method according to one of claims 13 to 16,
**characterized in that**
the exhaust gas (3) following the filter (8) and the plant fan (7) is at least partly returned to the mill (2).

18. Method according to one of claims 13 to 17,
**characterized in that**
the pressure level in the roller mill (2) and extending into the filter (8) is raised through the upstream mill fan (10).

19. Method according to one of claims 13 to 18,
**characterized in that**
exhaust gases (3) of other milling systems are supplied to the filter (8) and dedusted.

## Revendications

1. Installation de broyage
avec un broyeur (2) à rouleaux, en particulier un broyeur à courant d'air, avec un bac de broyage (12), une roue (11) à palettes et un tamis (13), et avec un ventilateur (7) qui est placé après un filtre (8) et place sous une dépression le filtre (8), le broyeur (2) à rouleaux et une conduite gaz-poussières (9) entre le filtre (8) et le broyeur (2) à rouleaux, ainsi qu'avec un ventilateur (10) de broyeur avant le broyeur (2) à rouleaux, qui pousse le flux de gaz nécessaire dans le broyeur (2) à rouleaux,
***caractérisée en ce que***
un niveau de pression prédéterminable peut être instauré avant, dans et après le broyeur (2) à rouleaux par le ventilateur (10) de broyeur et le ventilateur (7) d'échappement, et le point zéro de la pression peut être fixé au niveau de la roue (11) à palettes et du bac de broyage (12).

2. Installation de fabrication de ciment,
avec un broyeur (2) à rouleaux dans lequel, en montage mixte avec un four rotatif (40) à ciment et une unité (42) échangeuse de chaleur, une matière première de ciment est soumise à un séchage-broyage avec des gaz d'échappement (3) provenant du four rotatif (40) à ciment, avec un ventilateur (5) de four qui est placé après l'unité (42) échangeuse de chaleur et envoie les gaz d'échappement (3) du four rotatif (40) à ciment à une conduite (6) d'échappement, et avec un ventilateur (7) d'échappement qui est placé après un filtre (8) et charge sous une dépression le filtre (8), le broyeur (2) à rouleaux avec une roue (11) à aubes, un bac de broyage (12) et un tamis (13) ainsi qu'une conduite gaz-poussières (9) entre le filtre (8) et le broyeur (2) à rouleaux,
***caractérisée***
***en ce qu'****un* ventilateur (10) de broyeur est placé avant le broyeur (2) à rouleaux et pousse le flux de gaz nécessaire dans le broyeur (2) à rouleaux, et *en ce* qu'un niveau de pression prédéterminable peut être instauré avant, dans, et après, le broyeur (2) à rouleaux et le point zéro de la pression peut être fixé au niveau de la roue (11) à palettes et du bac de broyage (12).

3. Installation de broyage selon la revendication 1 ou installation selon la revendication 2,
***caractérisée en ce que***
le point zéro de la pression ou une dépression minimale peuvent être instaurés dans une zone supérieure de la roue (11) à palettes jusqu'à un bord supérieur du bac de broyage (12).

4. Installation de broyage selon la revendication 1, 3 ou installation selon l'une quelconque des revendications 2, 3,
***caractérisée***
***en ce* qu'**avec le ventilateur (10) de broyeur placé avant, une surpression peut être instaurée avant, et dans, le broyeur (2) à rouleaux au-dessous de la roue (11) à palettes, et une dépression au-dessus du bac de broyage (12) et au niveau du tamis (13), lequel est intégré au broyeur (2) à rouleaux.

5. Installation de broyage selon l'une quelconque des revendications 1, 3, 4 ou installation selon l'une quelconque des revendications 2 à 4,
***caractérisée***
***en ce* qu'**une dépression peut être instaurée dans le filtre (8) et le filtre (8) comprend une structure de boîtier relativement légère.

6. Installation de broyage selon l'une quelconque des revendications 1, 3 à 5 ou installation selon l'une quelconque des revendications 2 à 5,
***caractérisée en ce que***
le broyeur (2) à rouleaux comprend des joints d'étanchéité simplifiés, en particulier au niveau de l'introduction des matières premières et des traversées de pièces mobiles à travers le boîtier de broyeur.

7. Installation de broyage selon l'une quelconque des revendications 1, 3 à 6 ou installation selon l'une quelconque des revendications 2 à 6,
***caractérisée en ce que***
des dispositifs de dépoussiérage peuvent être raccordés sur la conduite gaz-poussières (9).

8. Installation selon l'une quelconque des revendications 2 à 7,
***caractérisée***
***en ce qu*'**une conduite de dérivation (15) est prévue pour introduire des gaz d'échappement (3) provenant du four rotatif à ciment (40) et *en ce que* la conduite de dérivation (15) part de la conduite d'échappement (6) avant un dispositif de régulation et de fermeture (46) dans la direction d'écoulement.

9. Installation selon l'une quelconque des revendications 2 à 8,
***caractérisée en ce que***
l'écoulement de gaz en direction du filtre (8) peut être conditionné en termes de débit volumique et de température du gaz d'une manière essentiellement indépendante de l'écoulement du gaz à travers le broyeur (2) à rouleaux.

10. Installation selon l'une quelconque des revendications 2 à 9,
***caractérisée***
***en ce* qu'**après le filtre (8) est placée une conduite de retour (16) pour ramener des écoulements de gaz régulables dans le broyeur (2) à rouleaux.

11. Installation selon la revendication 10,
***caractérisée en ce que***
des dispositifs de régulation et de fermeture (46, 47, 48) sont placés dans la conduite d'échappement (6) ainsi que dans la conduite de dérivation (15) et dans la conduite de retour (16).

12. Installation de broyage selon l'une quelconque des revendications 1, 3 à 7 ou installation selon l'une quelconque des revendications 2 à 11,
***caractérisée***
***en ce qu*'**un dispositif (20) de mesure de débit de gaz est placé avant le ventilateur (10) de broyeur sur la conduite d'alimentation menant au broyeur (2) à rouleaux.

13. Procédé de fabrication de ciment dans un système mixte, dans lequel un mélange de matières premières (33) est soumis à un séchage-broyage dans un broyeur (2) à rouleaux avec introduction de gaz d'échappement (3) provenant d'un processus de calcination, puis est tamisé et envoyé sous forme de mélange poussières-gaz d'échappement à un filtre (8) pour séparer les poussières des gaz d'échappement (3) et les gaz d'échappement (3) sont introduits à l'aide d'un ventilateur (5) de four après la calcination et le préchauffage de la farine crue ainsi qu'avec un ventilateur (7) après un filtre (8) à travers le broyeur (2) à rouleaux et le filtre (8) suivant un montage mixte, en particulier dans une installation selon l'une quelconque des revendications 2 à 12,
***caractérisé***
***en ce qu*'**une quantité régulable de gaz d'échappement est poussée dans le broyeur (2) à rouleaux et à travers sa roue (11) à palettes avec un ventilateur de broyeur (10) placé avant le broyeur (2) à rouleaux, *en ce que* le point zéro de la pression est fixé au niveau de la roue (11) à palettes et du bac de broyage (12) du broyeur (2) à rouleaux et *en ce qu*'au-dessus de la roue (11) à palettes, une faible dépression est instaurée jusque dans le filtre (8).

14. Procédé selon la revendication 13,
***caractérisé***
***en ce qu*'**avant et au-dessous de la roue (11) à palettes du broyeur (2) à rouleaux, une surpression de 40 à 50 mbar par exemple est instaurée par le ventilateur (10) de broyeur placé avant.

15. Procédé selon la revendication 13 ou 14,
***caractérisé***
***en ce qu*'**au niveau de la roue (11) à palettes et du bac de broyage (12) est instaurée une dépression, en particulier d'environ -3 à -5 mbar, et, au niveau du tamis (13), de la conduite poussières-gaz d'échappement (9), ainsi que dans le filtre (8), est instaurée une dépression de -25 à -45 mbar, par exemple.

16. Procédé selon l'une quelconque des revendications 13 à 15,
***caractérisé en ce que***
le gaz d'échappement (3) provenant du processus de calcination est envoyé, au moins partiellement, directement au filtre (8) dans une conduite de dérivation (15), et est conditionné en termes de débit volumique et de température du gaz indépendamment du flux de gaz dans le broyeur (2) à rouleaux.

17. Procédé selon l'une quelconque des revendications 13 à 16,
***caractérisé***
***en ce qu*'**après le filtre (8) et le ventilateur d'installation (7), le gaz d'échappement (3) est réintroduit au moins partiellement dans le broyeur (2).

18. Procédé selon l'une quelconque des revendications 13 à 17,
***caractérisé en ce que**,*
du fait du ventilateur de broyeur (10) placé avant, le niveau de pression est augmenté dans le broyeur (2) à rouleaux jusque dans le filtre (8).

19. Procédé selon l'une quelconque des revendications 13 à 18,
***caractérisé en ce que***
des gaz d'échappement (3) d'autres systèmes de broyage sont introduits dans le filtre (8) et dépoussiérés.
